# EUROPÄISCHE PATENTSCHRIFT

(11) **EP 4 590 121 B1**
(45) Veröffentlichungstag und Bekanntmachung des Hinweises auf die Patenterteilung: **22.04.2026**
(21) Anmeldenummer: 23772853.0
(22) Anmeldetag: 18.09.2023
(51) Int. Cl.: A01M 7/00

(54) **ZIELGENAUE APPLIKATION VON FLÜSSIGKEITEN IN EINEM FELD FÜR KULTURPFLANZEN**
PRECISE APPLICATION OF LIQUIDS IN A FIELD FOR CULTIVATED PLANTS
APPLICATION PRÉCISE DE LIQUIDES DANS UN CHAMP POUR PLANTES CULTIVÉES

(30) Priorität: 22.09.2022 EP 22197104
(43) Veröffentlichungstag der Anmeldung: 30.07.2025
(73) Patentinhaber: Bayer Aktiengesellschaft, 51373 Leverkusen (DE)
(72) Erfinder: TEMPEL, Matthias, 51373 Leverkusen (DE); MAYER, Walter, 51373 Leverkusen (DE)
(74) Vertreter: BIP Patents
(86) Internationale Anmeldenummer: PCT/EP2023/075594
(87) Internationale Veröffentlichungsnummer: WO 2024/061802

(56) Entgegenhaltungen:
- EP-A1- 3 610 725
- FR-A1- 2 673 857
- US-A1- 2021 037 700
- US-A1- 2022 117 210

## Beschreibung

Die vorliegende Offenbarung betrifft das technische Gebiet der Präzisionslandwirtschaft. Gegenstände der vorliegenden Erfindung sind ein System und ein Verfahren zur präzisen Ausbringung einer Flüssigkeit in einem Feld für Kulturpflanzen.

Unter dem Begriff Präzisionslandwirtschaft (engl. *precision farming*) werden Verfahren der ortsdifferenzierten und zielgerichteten Bewirtschaftung landwirtschaftlicher Nutzflächen verstanden.

Mittels Fernerkundungsdaten und/oder Sensoren innerhalb eines Feldes und/oder Sensoren an Bearbeitungsmaschinen, die sich in dem Feld bewegen, können für verschiedene Teilbereiche in einem landwirtschaftlich genutzten Bereich eine Vielzahl von Eigenschaften mit einer hohen Ortsauflösung erfasst werden, wie z.B. Ernteertrag, Geländemerkmale/Topografie, Gehalt an organischer Substanz, Feuchtigkeit, Stickstoffgehalt, pH-Wert, Bodenbeschaffenheit, Unkrautverteilung u.v.m.

Ferner können Maßnahmen spezifisch in Teilbereichen oder sogar an einzelnen Pflanzen des Feldes ausgeführt werden.

FR2673857A1 offenbart ein Verfahren zum Versprühen einer flüssigen Substanz mittels eines Applikators, eine Sprühvorrichtung und eine bewegliche Sprühmaschine.

US2022117210A1 offenbart eine landwirtschaftliche Sprüheinheit und eine Sprühabweisvorrichtung dafür.

US20210299692A1 offenbart ein landwirtschaftliches Sprühgerät, das einen Sensor für Pflanzenmerkmale umfasst. Das Sprühgerät ist konfiguriert, Pflanzenschutzmittel gezielt auf Komponenten von Pflanzen zu applizieren, die mittels des Sensors für Pflanzenmerkmale identifiziert werden.

US20220117151A1 offenbart ein Verfahren zum Ausbringen einer Flüssigkeit auf einem Feld, bei dem die Position jeder einzelnen Düse eines landwirtschaftlichen Sprühgeräts bestimmt wird. Es wird für jede der Düsen eine definierte Durchflussmenge auf der Grundlage der Position der jeweiligen Düse auf dem Feld festgelegt. Eine Feldkarte wird verwendet, die Angaben zum Bedarf der Pflanzen und zu den Ausbringungsbeschränkungen enthält. Die Durchflussmenge für jede Düse wird auf Basis eines Vergleichs der Position der Düse mit der Feldkarte festgelegt.

Bei der Ausbringung von Flüssigkeiten in einem Feld für Kulturpflanzen kommen häufig pulsweitenmoduliert (PWM) angesteuerte Ventile zum Einsatz. Diese werden üblicherweise vor jeder Düse angebracht. Bei der Pulsweitenmodulation wird ein Rechteckspannungssignal mit definierter Periodendauer erzeugt. Die Ventile werden also in schneller Folge ein- und ausgeschaltet. Das Verhältnis von Einschaltzeit zu Ausschaltzeit wird variiert und bestimmt den mittleren Ventil-Durchfluss. Somit kann die Durchflussmenge unabhängig vom Druck gesteuert werden. An jeder Düse kann die Menge individuell angepasst werden. Die Verwendung von pulsweitenmoduliert angesteuerten Ventilen im Bereich der Landwirtschaft ist beispielsweise beschrieben in: WO2020/245025A1, WO2008/112930A1, US9635848 und DE102018208156A.

Es besteht der Bedarf, Flüssigkeiten in einem Feld für Kulturpflanzen mit zunehmender Genauigkeit zu applizieren, um Ressourcen zu schonen, die Effizienz der ausgebrachten Mittel zu steigern und eine Applikation in unerwünschten Bereichen zu verhindern. Bei der Bekämpfung von Begleitpflanzen, die sich in einem Feld neben den Kulturpflanzen entwickeln, besteht beispielsweise der Bedarf, nur die Begleitpflanzen mit einem Herbizid zu behandeln und kein Herbizid auf Kulturpflanzen oder auf den Ackerboden zwischen den Pflanzen zu applizieren.

Eine solche zunehmende Ortsgenauigkeit bei der Applikation kann durch eine Vielzahl an Düsen, die eng nebeneinander angebracht sind, erreicht werden. Allerdings würde die Ausstattung jeder einzelnen Düse mit pulsweitenmoduliert angesteuerten Ventilen bei einer großen Zahl an Düsen eine beträchtliche Investition bedeuten.

In DE102018221442A1 und US2019232304A1 wird vorgeschlagen, vor dem Düsenausgang ein Dreiwegeventil anzubringen. Je nach Stellung des Dreiwegeventils wird eine Flüssigkeit durch den Düsenausgang in Richtung eines Zielobjekts gefördert oder die Flüssigkeit durch eine Rückleitung in einen Vorratsbehälter zurückgeführt. Vor jedem Düsenausgang herrscht ein Druck, um Flüssigkeit durch den Düsenausgang zu fördern. Das Hin- und Her-Schalten des Dreiwegeventils in einer unter Druck stehenden Leitung führt zu Druckschwankungen innerhalb der angeschlossenen Leitungen. Wird ein Dreiwegehahn vor einem Düsenausgang umgeschaltet, kann dies zu Druckschwankungen bei benachbarten Düsenausgängen führen. Die Druckschwankungen können dazu führen, dass Flüssigkeit aus benachbarten geöffneten Düsenausgängen ungleichmäßig austritt.

Diese und weitere Probleme werden durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist ein System zum Ausbringen einer Flüssigkeit in einem Feld für Kulturpflanzen umfassend
- eine Steuereinheit,
- mindestens einen Vorratsbehälter zur Aufnahme der Flüssigkeit,
- mindestens eine Düse,
- mindestens einen Auffangbehälter,
- Mittel zur Förderung der Flüssigkeit von dem mindestens einen Vorratsbehälter in Richtung der mindestens einen Düse,
- Mittel zur Förderung der Flüssigkeit von dem mindestens einen Auffangbehälter in Richtung des mindestens einen Vorratsbehälters,
- mindestens eine Umlenkeinrichtung,
wobei die Steuereinheit konfiguriert ist, die mindestens eine Umlenkeinrichtung zu veranlassen, zwischen einem ersten Zustand von mindestens zwei Zuständen und einem zweiten Zustand der mindestens zwei Zustände zu wechseln, wobei in einem der mindestens zwei Zustände aus der mindestens einen Düse austretende Flüssigkeit in Richtung eines Zielobjekts appliziert wird und in dem anderen Zustand der mindestens zwei Zustände die aus der mindestens einen Düse austretende Flüssigkeit in den mindestens einen Auffangbehälter appliziert wird.

Ein weiterer Gegenstand der vorliegenden Offenbarung ist ein Verfahren zum Ausbringen einer Flüssigkeit in einem Feld für Kulturpflanzen umfassend die Schritte:
- Bewegen eines Sprühgeräts in oder über dem Feld für Kulturpflanzen,
- Fördern einer Flüssigkeit aus mindestens einem Vorratsbehälter in Richtung mindestens einer Düse während des Bewegens,
- Wechseln einer Umlenkeinrichtung von einem ersten Zustand von mindestens zwei Zuständen in einen zweiten Zustand der mindestens zwei Zustände, wobei in einem der mindestens zwei Zustände aus der mindestens einen Düse austretende Flüssigkeit in Richtung eines Zielobjekts appliziert wird und in dem anderen Zustand der mindestens zwei Zustände die aus der mindestens einen Düse austretende Flüssigkeit in den mindestens einen Auffangbehälter appliziert wird, wobei Fördermittel die Flüssigkeit aus dem mindestens einen Auffangbehälter in den mindestens einen Vorratsbehälter fördern.

Die Erfindung wird nachstehend näher erläutert, ohne zwischen den Erfindungsgegenständen (System, Verfahren) zu unterscheiden. Die nachfolgenden Erläuterungen sollen vielmehr für alle Erfindungsgegenstände in analoger Weise gelten, unabhängig davon, in welchem Kontext (System, Verfahren) sie erfolgen.

Die vorliegende Erfindung offenbart Mittel zum Ausbringen einer Flüssigkeit in einem Feld für Kulturpflanzen.

Bei der Flüssigkeit kann es sich um Wasser oder eine wässrige Lösung oder Suspension handeln. Die wässrige Lösung oder Suspension kann einen oder mehrere Nährstoffe und/oder ein oder mehrere Pflanzenschutzmittel und/oder ein oder mehrere Mittel zur Behandlung von Saatgut enthalten.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Dabei handelt es sich meistens um einfache anorganische Verbindungen wie Nitrat (NO³⁻), Phosphat (PO₄³⁻) und Kalium (K⁺). Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Für die einzelnen Nährstoffe können verschiedene Verbindungen vorliegen, so kann beispielsweise Stickstoff als Nitrat, Ammonium oder Aminosäure zugeführt werden.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Beispiele für Pflanzenschutzmittel sind Herbizide, Fungizide und andere Pestizide (z.B. Insektizide).

Wachstumsregler dienen zum Beispiel der Erhöhung der Standfestigkeit bei Getreide durch Verkürzung der Halmlänge (Internodienverkürzer), Verbesserung der Bewurzelung von Stecklingen, Verringerung der Pflanzenhöhe durch Stauchung im Gartenbau oder der Verhinderung der Keimung von Kartoffeln. Wachstumsregler können beispielsweise Phytohormone oder deren synthetischen Analoge sein.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, gegebenenfalls mit Nährstoffen versorgt und geerntet werden.

Unter dem Begriff "Kulturpflanze" wird eine Pflanze verstanden, die durch das Eingreifen der Menschen zielgerichtet als Nutz- oder Zierpflanze angebaut wird.

Die Flüssigkeit wird in einem Feld für Kulturpflanzen auf ein oder mehrere Zielobjekte appliziert. Das Feld oder ein Teilbereich davon wird in dieser Beschreibung auch als Zielgebiet bezeichnet.

Beim Zielobjekt / bei den Zielobjekten kann es sich um eine oder mehrere Pflanzen oder Teile von Pflanzen, einen oder mehrere Bereiche eines Feldes, Schädlinge oder andere Objekte handeln.

In einer bevorzugten Ausführungsform handelt es sich bei den Zielobjekten um einzelne Kulturpflanzen oder (einzelne) Teile von einzelnen Kulturpflanzen oder um einzelne Gruppen von Kulturpflanzen.

In einer weiteren bevorzugten Ausführungsform handelt es sich bei den Zielobjekten um einzelne Samen oder Gruppen von Samen, die in einem Feld für Kulturpflanzen ausgesät werden und/oder ausgesät worden sind.

In einer weiteren bevorzugten Ausführungsform handelt es sich bei den Zielobjekten um einzelne Begleitpflanzen oder (einzelne) Teile von einzelnen Begleitpflanzen oder um einzelne Gruppen von Begleitpflanzen.

Unter dem Begriff "Begleitpflanzen" (oftmals auch als Unkraut/Unkräuter bezeichnet) werden Pflanzen der spontanen Begleitvegetation (Segetalflora) in Kulturpflanzenbeständen, Grünland oder Gartenanlagen verstanden, die dort nicht gezielt angebaut werden und z.B. aus dem Samenpotential des Bodens oder über Zuflug zur Entwicklung kommen.

In einer weiteren bevorzugten Ausführungsform handelt es sich bei den Zielobjekten um Pflanzenbestandteile, die von Schädlingen befallen sind. Solche Schädlinge können tierische Schädlinge, Pilze, Viren oder Bakterien sein.

Die Flüssigkeit befindet sich vor dem Ausbringen in einem Vorratsbehälter. Es können mehrere Vorratsbehälter vorhanden sein. Es können mehrere (verschiedene) Flüssigkeiten ausgebracht werden. Die Flüssigkeit wird über eine Düse oder mehrere Düsen auf das Zielobjekt ausgebracht. In einer Ausführungsform ist die mindestens eine Düse ein Bestandteil eines Inkjet-Druckkopfes. In der Ausführungsform wird also die Technik, die bei Inkjet-Druckern eingesetzt, um die Flüssigkeit auf das Zielobjekt auszubringen. Die Verwendung der Technik von Inkjet-Druckern in der Landwirtschaft ist beispielsweise beschrieben in M.- Idbella et al.: Structure, Functionality, Compatibility with Pesticides and Beneficial Microbes, and Potential Applications of a New Delivery System Based on Ink-Jet Technology, Sensors 2023, 23(6), 3053.

Zum Ausbringen wird die Flüssigkeit mit Fördermitteln aus dem mindestens einen Vorratsbehälter in Richtung der mindestens einen Düse befördert. Zur Förderung der Flüssigkeit kann beispielsweise eine Pumpe eingesetzt werden.

Eine Umlenkeinrichtung sorgt dafür, dass aus der mindestens einen Düse austretende Flüssigkeit in Richtung des Zielobjekts appliziert wird oder in Richtung eines Auffangbehälters appliziert wird.

Es kann für jede Düse jeweils eine Umlenkeinrichtung geben.

Es kann für jede Düse jeweils einen Auffangbehälter geben. Es kann für eine Gruppe von zwei oder mehr Düsen jeweils einen Auffangbehälter geben.

Die Umlenkeinrichtung kann mindestens zwei Zustände annehmen. In einem der mindestens zwei Zuständen sorgt die Umlenkeinrichtung dafür, dass Flüssigkeit, die aus der mindestens einen Düse austritt, in Richtung eines Zielobjekts appliziert wird. In dem anderen Zustand sorgt die Umlenkeinrichtung dafür, dass Flüssigkeit, die aus der mindestens einen Düse austritt, in den mindestens einen Auffangbehälters appliziert wird. Die Umlenkeinrichtung kann zwischen den Zuständen wechseln. Es kann weitere Zustände geben.

In einer bevorzugten Ausführungsform gibt es genau zwei Zustände und die Umlenkeinrichtung sorgt dafür, dass aus der mindestens einen Düse austretende Flüssigkeit entweder in Richtung eines Zielobjekts (vorzugsweise auf das Zielobjekt) appliziert wird oder in Richtung eines Auffangbehälters (vorzugsweise in den Auffangbehälter) appliziert wird.

Bei der Umlenkeinrichtung kann es sich um eine Einrichtung handeln, bei der die mindestens eine Düse bewegt wird. Die Umlenkeinrichtung kann beispielsweise eine beweglich ausgeführte Düse in Kombination mit einem Aktuator sein, der die Düse von einer ersten Stellung, in der die Düse auf ein Zielobjekt gerichtet ist, in eine zweite Stellung bewegt, in der die Düse auf einen Auffangbehälter gerichtet ist, und/oder umgekehrt von der zweiten Stellung in die erste Stellung bewegt.

Die Umlenkeinrichtung kann beispielsweise, zusätzlich zu einer Luftdüse, einen hydraulisch bewegbaren Kolben umfassen, der mit der Düse verbunden ist. Die Hydraulik sorgt dafür, dass sich der Kolben in einer Kolbenführung bewegt. Es kann zwei Positionen des Kolbens innerhalb der Kolbenführung geben, zwischen denen durch Druckbeaufschlagung von zwei verschiedenen Seiten der Kolbenführung gewechselt werden kann. Der mit der Düse verbundene Kolben kann seine Bewegung innerhalb der Kolbenführung auf eine Düse übertragen, die ebenfalls zwischen zwei Positionen wechseln kann. Dabei kann die Düse eine translatorische Bewegung und/oder eine rotatorische Bewegung (z.B. eine Kippbewegung) ausführen. Die Düse kann beispielsweise von einer Position, in der die Düse mit dem Düsenausgang in Richtung eines Auffangbehälters gerichtet ist, in eine zweite Position wechseln, in der die Düse mit dem Düsenausgang in Richtung eines Zielobjekts gerichtet ist. Anstelle einer Hydraulik kann der Kolben auch mittels eines Motors z.B. eines Schrittmotors bewegt werden.

Die Umlenkeinrichtung kann beispielsweise, zusätzlich zu einer Luftdüse, einen Elektromagneten umfassen, der im stromdurchflossenen Zustand die mindestens eine Düse in einer ersten von zwei Stellungen festhält, während eine gespannte Feder die mindestens eine Düse in einem stromlosen Zustand des Elektromagneten in die zweite von den zwei Stellungen bewegt und dort festhält. Ist der Elektromagnet wieder stromdurchflossen, bewegt er die mindestens eine Düse in die erste Stellung und hält sie dort fest. Anstelle eines Elektromagneten in Kombination mit einer Feder können auch zwei Elektromagneten eingesetzt werden, von denen stets einer stromdurchflossen ist und der andere stromlos ist, wobei der jeweils stromdurchflossene Elektromagnet die Düse zu sich zieht und festhält. Auch in einer solchen Ausführungsform mit einem oder zwei Elektromagneten kann die Düse eine translatorische und/oder rotatorische Bewegung ausführen.

Die Umlenkeinrichtung umfasst gemäß der Erfindung eine Luftdüse, über die ein Luftstrom in Richtung der mindestens einen Düse geleitet werden kann. Aus der Luftdüse kann beispielsweise mit einem Kompressor erzeugte Pressluft auf die mindestens eine Düse geleitet werden. Der Luftstrom kann einen Impuls auf die mindestens eine Düse ausüben, der sie in eine definierte Position gegenüber dem Zielobjekt oder dem mindestens einen Auffangbehälter bringt. Nach Abschalten des Luftstroms kann eine Feder die mindestens eine Düse wieder in ihre Ausgangsstellung bewegen. Es ist auch möglich, dass zwei Luftdüsen vorhanden sind, die jeweils einen Luftstrom auf die mindestens eine Düse leiten, wobei die Luftdüsen mittels des Luftstroms einen Impuls von unterschiedlichen Seiten auf die mindestens eine Düse ausüben, so dass der Luftstrom aus einer Luftdüse die mindestens eine Düse so gegenüber dem mindestens einen Auffangbehälter positioniert, dass aus der mindestens einen Düse austretende Flüssigkeit in den Auffangbehälter appliziert wird und der Luftstrom aus der anderen Luftdüse die mindestens eine Düse so gegenüber dem Zielobjekt positioniert, dass aus der mindestens einen Düse austretende Flüssigkeit in Richtung des Zielobjekts und/oder auf das Zielobjekt appliziert wird. Die beiden Luftdüsen können beispielsweise mit einem Dreiwegeventil verbunden sein, das dafür sorgt, dass Luftstrom nur aus einer der beiden Luftdüsen austritt. Durch Umschalten des Dreiwegeventils kann die mindestens eine Düse von einer Position in die jeweils andere bewegt werden. Um einen dauerhaften Luftstrom zu vermeiden, der die mindestens eine Düse in einer Position festhält, kann ein Arretier-Mechanismus vorhanden sein. Der Arretier-Mechanismus kann dafür sorgen, dass die durch den Luftstrom in eine definierte Position gebrachte mindestens eine Düse in dieser verbleibt. Ein solcher Arretier-Mechanismus kann beispielsweise einen Haken und eine Öse umfassen, wobei eines der genannten Elemente an der mindestens einen Düse angebracht ist und das andere Element an der Position angebracht ist, in der die mindestens eine Düse festgehalten werden soll. Bringt der Luftstrom die mindestens eine Düse in die genannte Position, kann der Haken in die Öse gleiten und die mindestens eine Düse in der Position festhalten. Es kann ferner ein Löse-Mechanismus vorhanden sein, der die mindestens eine Düse von der Position, in der sie festgehalten wird, löst. Der Löse-Mechanismus kann beispielsweise den in der Öse befindlichen Haken aus der Öse drücke, z.B. durch einen Aktuator.

Die hier beschriebenen Lösungen zur Bewegung/Positionierung der mindestens einen Düse können auch miteinander kombiniert werden. So ist es beispielsweise denkbar, dass ein oder mehrere Elektromagneten für das Festhalten der mindestens einen Düse in einer oder mehreren Positionen sorgen, während eine oder mehrere Luftdüsen für eine Bewegung der mindestens einen Düse von einer Position in eine andere sorgen. Auch weitere/andere Mittel zur Positionieren der mindestens einen Düse gegenüber dem mindestens einen Auffangbehälter und/oder dem Zielobjekt sind möglich.

Bei der Umlenkeinrichtung kann es sich auch um eine Einrichtung handeln, bei der der mindestens eine Auffangbehälter bewegt wird. Anstelle also die Düse in Relation zu dem Auffangbehälter zu bewegen und so zu positionieren, dass aus der mindestens einen Düse austretende Flüssigkeit in den Auffangbehälter gelangt, kann auch der Auffangbehälter in Relation zu der Düse bewegt und positioniert werden. Dabei können dieselben Mittel zur Bewegung/Positionierung des Auffangbehälters verwendet werden, wie oben für die Bewegung/Positionierung der Düse beschrieben (ein beweglich ausgeführter Kolben, ein Elektromagnet in Kombination mit einer Feder, zwei Elektromagnete, eine Luftdüse in Kombination mit einer Feder, Arretier- und/oder Löse-Mechanismen, zwei Luftdüsen oder Kombinationen davon). Ebenso kann auch der Auffangbehälter eine translatorische Bewegung und/oder eine rotatorische Bewegung ausführen.

Ferner ist es möglich, dass sowohl die Düse als auch der Auffangbehälter durch die Umlenkeinrichtung veranlasst werden, eine Bewegung auszuführen, die die Düse in einem Zustand so gegenüber dem Auffangbehälter positioniert, dass aus dem Düsenausgang austretende Flüssigkeit in den Auffangbehälter gelenkt wird, oder alternativ so positioniert, dass aus dem Düsenausgang austretende Flüssigkeit auf ein Zielobjekt gelenkt wird.

Bei der Umlenkeinrichtung kann es sich auch um eine Einrichtung handeln, bei der die Flüssigkeit, die aus der mindestens einen Düse austritt, umgelenkt wird. Das Umlenken der Flüssigkeit kann beispielsweise mit Hilfe eines Luftstroms erfolgen. Der Luftstrom kann beispielsweise quer zur Richtung der aus der Düse austretenden Flüssigkeit gerichtet sein (zum Beispiel in einem Winkel von 90°). In einem der mindestens zwei Zustände kann der Luftstrom ausgeschaltet sein, in einem zweiten Zustand der mindestens zwei Zustände kann der Luftstrom eingeschaltet sein und einen Impuls auf die austretende Flüssigkeit ausüben, der die austretende Flüssigkeit in eine definierte Richtung lenkt.

Das Umlenken der Flüssigkeit kann beispielsweise auch durch Anlegen eines elektrischen Feldes erfolgen. Die Flüssigkeit kann z.B. beim Austreten aus der Düse elektrisch geladen werden. Ohne elektrisches Feld bewegt sich die Flüssigkeit in eine Richtung, die durch die Richtung der Schwerkraft und die Richtung des Impulses der aus dem Düsenausgang austretenden Flüssigkeit und der Austrittgeschwindigkeit der Flüssigkeit vorgegeben ist. Mittels eines elektrischen Feldes kann die elektrisch geladene Flüssigkeit dann in eine definierte Richtung umgelenkt werden.

Es ist auch möglich, eine Kombination der hier beschriebenen Maßnahmen zum Umlenken der Flüssigkeit zu realisieren.

Die hier beschriebene Umlenkeinrichtung setzt der aus dem Düsenausgang austretenden Flüssigkeit beim Wechseln von einem Zustand in einen anderen Zustand keinen nennenswerten Widerstand entgegen, der zu Druckschwankungen in den Zuleitungen zu der mindestens einen Düse führt.

Ein Wechsel der Umlenkeinrichtung von einem Zustand in einen anderen Zustand wird durch eine Steuereinheit veranlasst. Die Steuereinheit kann konfiguriert sein, ein Steuersignal an die Umlenkeinrichtung zu senden, die zu einem veränderten Zustand (beispielsweise zu einem Wechsel von einem Zustand in einen anderen Zustand) führt. Es ist möglich, dass die Steuereinheit den Stromfluss durch den oder die Elektromagneten steuert oder die Hydraulik steuert oder das elektrische Feld steuert oder den Luftstrom an- und ausschaltet.

Es ist denkbar, dass eine einzelne Steuereinheit eine Mehrzahl oder alle der dem System zugehörigen Umlenkeinrichtungen steuert. Es ist denkbar, dass mehrere Steuereinheiten in dem System vorhanden sind. Es ist möglich, dass jede Umlenkeinrichtung über eine eigene Steuereinrichtung verfügt. Vorzugsweise umfasst das System eine einzelne Steuereinheit zum Steuern aller in dem System vorhandenen Umlenkeinrichtungen.

Vorzugsweise sind alle Umlenkeinrichtungen unabhängig voneinander ansteuerbar, so dass beispielsweise eine Düse Flüssigkeit in Richtung eines Zielobjekts appliziert und eine benachbarte Düse gleichzeitig Flüssigkeit in Richtung eines Auffangbehälters appliziert.

Vorzugsweise ist die Steuereinheit mit einem oder mehreren Sensoreinheiten verbunden.

Eine Sensoreinheit umfasst mindestens einen Sensor.

Ein "Sensor" ist ein technisches Bauteil, das bestimmte physikalische und/oder chemische Eigenschaften und/oder die stoffliche Beschaffenheit seiner Umgebung qualitativ oder als Messgröße quantitativ erfassen kann. Diese Größen werden mittels physikalischer oder chemischer Effekte erfasst und in ein weiterverarbeitbares, meist elektrisches oder optisches Signal umgeformt.

Eine Sensoreinheit kann Mittel zur Verarbeitung von Signalen enthalten, die der mindestens eine Sensor liefert. Eine Sensoreinheit kann Mittel zum Übermitteln und/oder Weiterleiten von Signalen und/oder Informationen (z.B. an die Steuereinheit) umfassen.

Die eine oder die mehreren Sensoreinheiten können Bestandteil des Systems sein und/oder mit diesem über eine Kommunikationsverbindung (z.B. über Funk) verbunden sein.

Der eine oder die mehreren Sensoreinheiten können konfiguriert sein, kontinuierlich oder in definierten zeitlichen Abständen oder bei Eintritt definierter Ereignisse ein oder mehrere Signale an die Steuereinheit zu übermitteln, auf deren Basis die Steuereinheit die mindestens eine Umlenkeinrichtung steuert.

Die mindestens eine Sensoreinheit kann beispielsweise einen Empfänger eines Satellitennavigationssystems umfassen, umgangssprachlich auch als GPS-Empfänger bezeichnet. Das Global Positioning System (Abk.: GPS), offiziell NAVSTAR GPS, ist ein Beispiel eines globalen Satellitennavigationssystems zur Positionsbestimmung; andere Beispiele sind GLONASS, Galileo und Beidou. Die Satelliten eines solchen Satellitennavigationssystems teilen über Funkcodes ihre genaue Position und Uhrzeit mit. Zur Positionsbestimmung muss ein Empfänger (der "GPS-Empfänger") die Signale von mindestens vier Satelliten gleichzeitig empfangen. Im Empfänger werden die Pseudo-Signallaufzeiten gemessen und daraus die aktuelle Position ermittelt.

Ähnlich wie in US20220117151A1 beschrieben kann die Sensoreinheit umfassend einen Empfänger eines Satellitennavigationssystems konfiguriert sein, Informationen zur Position des Systems oder zur Position einzelner Düsen in einem Feld für Kulturpflanzen an die Steuereinheit übermitteln. Die Steuereinheit kann konfiguriert sein, anhand der Positionsinformationen Informationen über eine Anforderung an die Ausbringung einer Flüssigkeit aus einer Feldkarte zu ermitteln. Zum Beispiel kann in der Feldkarte verzeichnet sein, an welchen Positionen in dem Feld eine Ausbringung einer Flüssigkeit erfolgen soll und/oder nicht erfolgen soll. Die Steuereinheit kann konfiguriert sein, die Umlenkeinrichtung entsprechend den ermittelten Informationen zu steuern: an Positionen im Feld, in denen Flüssigkeit ausgebracht werden soll, kann die Steuereinheit die Umlenkeinrichtung veranlassen, die aus der mindestens einen Düse austretende Flüssigkeit in Richtung eines Zielobjekts zu applizieren; an Positionen im Feld, in denen keine Flüssigkeit ausgebracht werden soll, kann die Steuereinheit die Umlenkeinrichtung veranlassen, die aus der mindestens einen Düse austretende Flüssigkeit in Richtung eines Auffangbehälters zu applizieren.

Die mindestens eine Sensoreinheit kann eine Kamera oder mehrere Kameras umfassen. Eine solche Kamera kann einen Bildsensor und optische Elemente umfassen. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD *= charge-coupled device*) oder CMOS-Sensoren (CMOS *= complementary metal-oxide-semiconductor*)*.* Die optischen Elemente (Linsen, Blenden und dergleichen) dienen einer möglichst scharfen Abbildung eines Objekts auf dem Bildsensor.

Die Kamera kann durch eine Steuereinheit veranlasst werden, in definierten Zeitabständen oder kontinuierlich Bildaufnahmen von dem Feld, dem Boden des Feldes, von Kulturpflanzen, von Begleitpflanzen und/oder von Schädlingen zu erzeugen. Dabei kann es sich bei der Steuereinheit um die Steuereinheit des erfindungsgemäßen Systems oder um eine separate Steuereinheit handeln. Die Steuereinheit kann Bestandteil der Kamera, des erfindungsgemäßen Systems oder eine separate Vorrichtung sein.

Die erzeugten Bildaufnahmen können an eine Analyseneinheit übermittelt werden. Die Analyseneinheit kann konfiguriert sein, die erzeugten Bildaufnahmen zu analysieren, um definierte Objekte in den Bildaufnahmen zu erkennen, z.B. eine definierte Pflanzen (z.B. eine Begleitpflanze) und/oder einen Teil einer definierten Pflanze (z.B. ein Blatt) und/oder einen Schädling und/oder eine mit einem Schädling befallene Pflanze und/oder einen mit einem Schädling befallenen Teil einer Pflanze oder ein anderes Objekt. Methoden und Vorrichtungen zum Erkennen von Objekten in Bildaufnahmen sind vielfältig im Stand der Technik beschrieben (siehe. z.B.: WO2020120802A1, WO2020120804A1, WO2020229585A1).

Die Analyseneinheit kann Bestandteil der Kamera und/oder Bestandteil des erfindungsgemäßen Systems sein. Die Analyseneinheit kann konfiguriert sein, ein Erkennungssignal an die Steuereinheit des erfindungsgemäßen Systems zu übermitteln, wenn die Analyseneinheit ein spezifisches Objekt in einer Bildaufnahme identifiziert hat. Die Steuereinheit kann konfiguriert sein, in Reaktion auf das Erkennungssignal ein Steuersignal an die mindestens eine Umlenkeinrichtung zu senden, die die mindestens eine Umlenkeinrichtung veranlasst, den Zustand zu wechseln, beispielswiese aus der mindestens einen Düse austretende Flüssigkeit in Richtung des spezifischen Objekts zu applizieren. Das erfindungsgemäße System kann ein Teil eines Sprühgeräts, beispielsweise einer Landmaschine, eines Roboters oder ein Luftfahrzeug (z.B. eine Drohne) sein oder damit verbindbar sein. Eine solches Sprühgerät kann sich autonom in bzw. über einem Feld bewegen oder durch einen Menschen gesteuert werden.

Vorzugsweise umfasst das erfindungsgemäße System eine Vielzahl von Düsen und Umlenkeinrichtungen. Der Begriff Vielzahl bedeutet vorzugsweise mehr als zehn. Die Düsen sind vorzugsweise so angeordnet, dass jede Düse Flüssigkeit in einem Bereich mit einer maximalen lateralen Ausdehnung von weniger als 20 cm, vorzugsweise weniger als 10 cm, am meisten bevorzugt von weniger als 5 cm appliziert.

Die Vielzahl an Düsen kann beispielsweise nebeneinander entlang eines Sprühbalkens angeordnet sein, der sich quer (z.B. in einem Winkel von 90°) zu der Bewegungsrichtung des Sprühgeräts erstreckt.

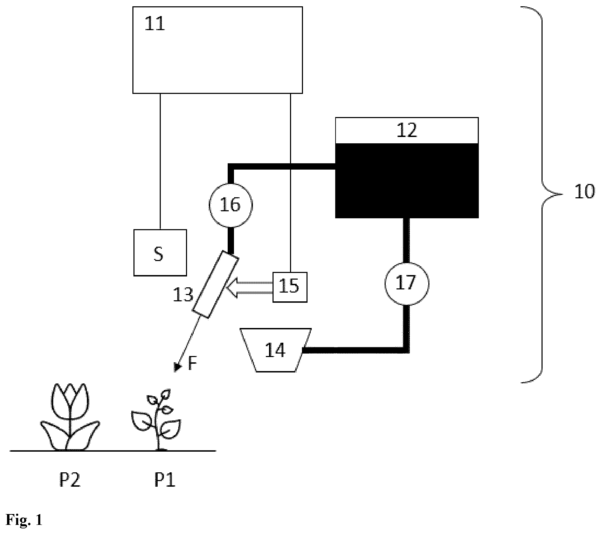

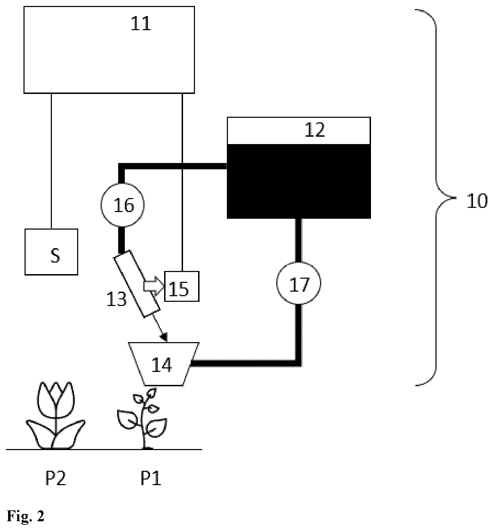

Fig. 1 und Fig. 2 zeigen beispielhaft und schematisch eine Ausführungsform des erfindungsgemäßen Systems.

Das System (10) umfasst eine Steuereinheit (11), einen Vorratsbehälter (12), eine Düse (13), einen Auffangbehälter (14), eine Umlenkeinrichtung (15), Mittel (16) zum Fördern einer Flüssigkeit (F) aus dem Vorratsbehälter (12) in Richtung der Düse (13) und Mittel (17) zum Fördern der Flüssigkeit (F) von dem Auffangbehälter (14) in Richtung des Vorratsbehälters (12).

In Fig. 1 und 2 ist zudem eine Sensoreinheit (S) dargestellt, die mit der Steuereinheit (11) verbunden ist. Die Sensoreinheit (S) kann ein Bestandteil des erfindungsgemäßen System (10) oder eine separate Vorrichtung sein. Die Sensoreinheit (S) erkennt in Fig. 1 eine Begleitpflanze (P1), die sich unterhalb der Sensoreinheit (S) befindet, und übermittelt ein Erkennungssignal an die Steuereinheit (11). Die Steuereinheit (11) veranlasst die Umlenkeinrichtung (15) die aus der Düse (13) austretende Flüssigkeit (F) in Richtung der Begleitpflanze (P1) zu applizieren. Die Begleitpflanze (P1) ist im vorliegenden Beispiel das Zielobjekt. In Fig. 2 hat sich das System (10) gegenüber der Begleitpflanze (P1) und einer benachbarten Kulturpflanze (P2) in Richtung der benachbarten Kulturpflanze (P2) bewegt (in Fig. 2 nach links). Die Sensoreinheit (S) erkennt nun eine Kulturpflanze (P2) und übermittelt ein Erkennungssignal an die Steuereinheit (11). Die Steuereinheit (11) veranlasst die Umlenkeinrichtung (15) die aus der Düse (13) austretende Flüssigkeit (F) in Richtung des Auffangbehälters (14) zu applizieren.

## Patentansprüche

1. System (10) zum Ausbringen einer Flüssigkeit (F) in einem Feld für Kulturpflanzen (P2) umfassend
- eine Steuereinheit (11),
- mindestens einen Vorratsbehälter (12) zur Aufnahme der Flüssigkeit (12),
- mindestens eine Düse (13),
- mindestens einen Auffangbehälter (14),
- Mittel (16) zur Förderung der Flüssigkeit (F) von dem mindestens einen Vorratsbehälter (12) in Richtung der mindestens einen Düse (13),
- Mittel (17) zur Förderung der Flüssigkeit (F) von dem mindestens einen Auffangbehälter (14) in Richtung des mindestens einen Vorratsbehälters (12),
- mindestens eine Umlenkeinrichtung (15),
- wobei die Steuereinheit (11) konfiguriert ist, die mindestens eine Umlenkeinrichtung (15) zu
veranlassen, zwischen einem ersten Zustand von mindestens zwei Zuständen und einem zweiten Zustand der mindestens zwei Zustände zu wechseln, wobei in einem der mindestens zwei Zustände aus der mindestens einen Düse (13) austretende Flüssigkeit (F) in Richtung eines Zielobjekts (P1) appliziert wird und in dem anderen Zustand der mindestens zwei Zustände die aus der mindestens einen Düse (13) austretende Flüssigkeit (F) in Richtung des mindestens einen Auffangbehälters (14) appliziert wird,
**dadurch gekennzeichnet, dass** die Umlenkeinrichtung (15) mindestens eine Luftdüse umfasst, wobei die mindestens eine Luftdüse so ausgerichtet ist, dass ein aus der mindestens einen Luftdüse austretender Luftstrom die Umlenkeinrichtung (15) von dem ersten Zustand in den zweiten Zustand wechselt und/oder von dem zweiten Zustand in den ersten Zustand wechselt

2. System (10) gemäß Anspruch 1, wobei die mindestens eine Düse (13) beweglich ausgeführt ist, wobei der Luftstrom die mindestens eine Düse (13) von einer ersten Position in eine zweite Position bewegt.

3. System (10) gemäß Anspruch 2, wobei die mindestens eine Düse (13) zwischen zwei Positionen kippbar ausgeführt ist.

4. System (10) gemäß einem der Ansprüche 1 bis 3, wobei der mindestens eine Auffangbehälter (14) beweglich ausgeführt ist, wobei der Luftstrom den mindestens einen Auffangbehälter (14) von einer ersten Position in eine zweite Position zu bewegt.

5. System (10) gemäß Anspruch 4, wobei der mindestens eine Auffangbehälter (14) zwischen zwei Positionen kippbar ausgeführt ist.

6. System (10) gemäß einem der Ansprüche 1 bis 5, wobei der Luftstrom die aus der mindestens einen Düse (13) austretende Flüssigkeit (F) in Richtung des mindestens einen Auffangbehälter (14) umlenkt.

7. System (10) gemäß einem der Ansprüche 1 bis 6, wobei die Steuereinheit (11) konfiguriert ist, ein Erkennungssignal von einer Sensoreinheit (S) zu empfangen und die mindestens eine Umlenkeinrichtung (15) in Abhängigkeit des Erkennungssignal zu steuern.

8. System (10) gemäß einem der Ansprüche 1 bis 7, wobei das System (10) ein Teil einer Landmaschine, eines Roboters oder eine Drohne ist, oder damit verbindbar ist.

9. System (10) gemäß einem der Ansprüche 1 bis 8, umfassend eine Vielzahl von Düsen (13), wobei die Düsen (13) so angeordnet sind, dass jede Düse (13) einen Bereich mit Flüssigkeit (F) besprüht, der eine maximale laterale Ausdehnung von weniger als 10 cm hat.

10. System (10) gemäß einem der Ansprüche 1 bis 9, ferner umfassend eine Sensoreinheit (S), wobei die Sensoreinheit (S) eine Kamera und eine Analyseneinheit umfasst, wobei die Kamera konfiguriert ist, Bildaufnahmen von einem Zielgebiet zu erzeugen, wobei die Analyseneinheit konfiguriert ist, die Bildaufnahmen zu analysieren, ein spezifisches Zielobjekt (P1) zu erkennen und ein Erkennungssignal an die Steuereinheit zu übermitteln, wobei die Steuereinheit konfiguriert ist, die mindestens eine Umlenkeinrichtung (15) zu veranlassen, in Reaktion auf die Übermittlung des Erkennungssignals aus der mindestens einen Düse (13) austretende Flüssigkeit (F) in Richtung des spezifischen Zielobjekts (P1) zu lenken.

11. System (10) gemäß einem der Ansprüche 1 bis 10, wobei die mindestens eine Düse (13) ein Bestandteil eines Inkjet-Druckkopfes ist.

12. Verfahren zum Ausbringen einer Flüssigkeit (F) in einem Feld für Kulturpflanzen (P2) umfassend die Schritte:
- Bewegen eines Sprühgeräts in oder über dem Feld (F) für Kulturpflanzen (P2),
- Fördern der Flüssigkeit (F) aus mindestens einem Vorratsbehälter (12) in Richtung mindestens einer Düse (13) während des Bewegens,
- Wechseln einer Umlenkeinrichtung (15) von einem ersten Zustand von mindestens zwei Zuständen in einen zweiten Zustand der mindestens zwei Zustände, wobei in einem der mindestens zwei Zustände aus der mindestens einen Düse (13) austretende Flüssigkeit (F) in Richtung eines Zielobjekts (P1) appliziert wird und in dem anderen Zustand der mindestens zwei Zustände die aus der mindestens einen Düse (13) austretende Flüssigkeit in Richtung mindestens eines Auffangbehälters (14) appliziert wird, wobei Fördermittel (17) die Flüssigkeit (F) aus dem mindestens einen Auffangbehälter (14) in den mindestens einen Vorratsbehälter (12) fördern,
**dadurch gekennzeichnet, dass** die Umlenkeinrichtung (15) mindestens eine Luftdüse umfasst, wobei die mindestens eine Luftdüse so ausgerichtet ist, dass ein aus der mindestens einen Luftdüse austretender Luftstrom die Umlenkeinrichtung (15) von dem ersten Zustand in den zweiten Zustand wechselt und/oder von dem zweiten Zustand in den ersten Zustand wechselt.

13. Verfahren gemäß Anspruch 12, wobei die Flüssigkeit (F) einen oder mehrere Nährstoffe und/oder einen oder mehrere Pflanzenschutzmittel und/oder ein oder mehrere Mittel zur Behandlung von Saatgut umfasst.

14. Verfahren gemäß einem der Ansprüche 12 oder 13, wobei das Zielobjekt (P1) eine Pflanze oder eine Gruppe von Pflanzen ist oder ein Teil einer Pflanze oder mehrere Teile einer Pflanze ist.

15. Verfahren gemäß einem der Ansprüche 12 bis 14, umfassend die Schritte:
- Bewegen des Sprühgeräts in oder über dem Feld für Kulturpflanzen (P2),
- Fördern der Flüssigkeit (F) aus dem mindestens einen Vorratsbehälter (12) in Richtung der mindestens einen Düse (13) während des Bewegens,
- Empfangen eines Signals zur Anwesenheit eines spezifischen Zielobjekts (P1),
- Wechseln der Umlenkeinrichtung (15) von dem ersten Zustand in den zweiten Zustand, wobei der erste Zustand die aus der mindestens einen Düse (13) austretende Flüssigkeit (F) in Richtung des mindestens einen Auffangbehälters (14) appliziert und der zweite Zustand die aus der mindestens einen Düse (13) austretende Flüssigkeit (F) in Richtung des spezifischen Zielobjekts (P1) appliziert.

## Claims

1. System (10) for dispensing a liquid (F) in a field for crop plants (P2) comprising
- a control unit (11),
- at least one storage container (12) for receiving the liquid (12),
- at least one nozzle (13),
- at least one collecting container (14),
- means (16) for conveying the liquid (F) from the at least one storage container (12) towards the at least one nozzle (13),
- means (17) for conveying the liquid (F) from the at least one collecting container (14) towards the at least one storage container (12),
- at least one deflection device (15),
- wherein the control unit (11) is configured to cause the at least one deflection device (15) to switch between a first state of at least two states and a second state of the at least two states, wherein in one of the at least two states liquid (F) exiting from the at least one nozzle (13) is applied towards a target object (P1) and in the other state of the at least two states the liquid (F) exiting from the at least one nozzle (13) is applied towards the at least one collecting container (14),
**characterized in that** the deflection device (15) comprises at least one air nozzle, wherein the at least one air nozzle is oriented such that an air stream exiting from the at least one air nozzle switches the deflection device (15) from the first state to the second state and/or from the second state to the first state.

2. System (10) according to claim 1, wherein the at least one nozzle (13) is designed to be movable, wherein the air stream moves the at least one nozzle (13) from a first position to a second position.

3. System (10) according to claim 2, wherein the at least one nozzle (13) is designed to be tiltable between two positions.

4. System (10) according to any one of claims 1 to 3, wherein the at least one collecting container (14) is designed to be movable, wherein the air stream moves the at least one collecting container (14) from a first position to a second position.

5. System (10) according to claim 4, wherein the at least one collecting container (14) is designed to be tiltable between two positions.

6. System (10) according to any one of claims 1 to 5, wherein the air stream deflects the liquid (F) exiting from the at least one nozzle (13) towards the at least one collecting container (14).

7. System (10) according to any one of claims 1 to 6, wherein the control unit (11) is configured to receive a recognition signal from a sensor unit (S) and to control the at least one deflection device (15) in dependence on the recognition signal.

8. System (10) according to any one of claims 1 to 7, wherein the system (10) is a part of an agricultural machine, a robot or a drone, or is connectable therewith.

9. System (10) according to any one of claims 1 to 8, comprising a plurality of nozzles (13), wherein the nozzles (13) are arranged such that each nozzle (13) sprays a region with liquid (F) that has a maximum lateral extent of less than 10 cm.

10. System (10) according to any one of claims 1 to 9, further comprising a sensor unit (S), wherein the sensor unit (S) comprises a camera and an analysis unit, wherein the camera is configured to generate image recordings of a target area, wherein the analysis unit is configured to analyse the image recordings, to recognize a specific target object (P1) and to transmit a recognition signal to the control unit, wherein the control unit is configured to cause the at least one deflection device (15), in response to the transmission of the recognition signal, to direct liquid (F) exiting from the at least one nozzle (13) towards the specific target object (P1).

11. System (10) according to any one of claims 1 to 10, wherein the at least one nozzle (13) is a component of an inkjet print head.

12. Method for dispensing a liquid (F) in a field for crop plants (P2) comprising the steps of:
- moving a spraying device in or over the field (F) for crop plants (P2),
- conveying the liquid (F) from at least one storage container (12) towards at least one nozzle (13) during the moving,
- switching a deflection device (15) from a first state of at least two states to a second state of the at least two states, wherein in one of the at least two states liquid (F) exiting from the at least one nozzle (13) is applied towards a target object (P1) and in the other state of the at least two states the liquid exiting from the at least one nozzle (13) is applied towards at least one collecting container (14), wherein conveying means (17) convey the liquid (F) from the at least one collecting container (14) to the at least one storage container (12),
**characterized in that** the deflection device (15) comprises at least one air nozzle, wherein the at least one air nozzle is oriented such that an air stream exiting from the at least one air nozzle switches the deflection device (15) from the first state to the second state and/or from the second state to the first state.

13. Method according to claim 12, wherein the liquid (F) comprises one or more nutrients and/or one or more plant protection products and/or one or more agents for treating seeds.

14. Method according to any one of claims 12 or 13, wherein the target object (P1) is a plant or a group of plants or is a part of a plant or several parts of a plant.

15. Method according to any one of claims 12 to 14, comprising the steps of:
- moving the spraying device in or over the field for crop plants (P2),
- conveying the liquid (F) from the at least one storage container (12) towards the at least one nozzle (13) during the moving,
- receiving a signal relating to the presence of a specific target object (P1),
- switching the deflection device (15) from the first state to the second state, wherein the first state applies the liquid (F) exiting from the at least one nozzle (13) towards the at least one collecting container (14) and the second state applies the liquid (F) exiting from the at least one nozzle (13) towards the specific target object (P1).

## Revendications

1. Système (10) pour la distribution d'un liquide (F) dans un champ pour plantes cultivées (P2) comprenant
- une unité de commande (11),
- au moins un réservoir de stockage (12) pour recevoir le liquide (12),
- au moins une buse (13),
- au moins un récipient collecteur (14),
- des moyens (16) pour acheminer le liquide (F) depuis le au moins un réservoir de stockage (12) en direction de la au moins une buse (13),
- des moyens (17) pour acheminer le liquide (F) depuis le au moins un récipient collecteur (14) en direction du au moins un réservoir de stockage (12),
- au moins un dispositif de déviation (15),
- dans lequel l'unité de commande (11) est configurée pour amener le au moins un dispositif de déviation (15) à commuter entre un premier état parmi au moins deux états et un deuxième état des au moins deux états, dans lequel dans l'un des au moins deux états le liquide (F) sortant de la au moins une buse (13) est appliqué en direction d'un objet cible (P1) et dans l'autre état des au moins deux états le liquide (F) sortant de la au moins une buse (13) est appliqué en direction du au moins un récipient collecteur (14),
**caractérisé en ce que** le dispositif de déviation (15) comprend au moins une buse d'air, dans lequel la au moins une buse d'air est orientée de telle sorte qu'un flux d'air sortant de la au moins une buse d'air commute le dispositif de déviation (15) du premier état au deuxième état et/ou du deuxième état au premier état.

2. Système (10) selon la revendication 1, dans lequel la au moins une buse (13) est conçue de manière mobile, dans lequel le flux d'air déplace la au moins une buse (13) d'une première position vers une deuxième position.

3. Système (10) selon la revendication 2, dans lequel la au moins une buse (13) est conçue de manière basculable entre deux positions.

4. Système (10) selon l'une quelconque des revendications 1 à 3, dans lequel le au moins un récipient collecteur (14) est conçu de manière mobile, dans lequel le flux d'air déplace le au moins un récipient collecteur (14) d'une première position vers une deuxième position.

5. Système (10) selon la revendication 4, dans lequel le au moins un récipient collecteur (14) est conçu de manière basculable entre deux positions.

6. Système (10) selon l'une quelconque des revendications 1 à 5, dans lequel le flux d'air dévie le liquide (F) sortant de la au moins une buse (13) en direction du au moins un récipient collecteur (14).

7. Système (10) selon l'une quelconque des revendications 1 à 6, dans lequel l'unité de commande (11) est configurée pour recevoir un signal de reconnaissance d'une unité de capteur (S) et pour commander le au moins un dispositif de déviation (15) en fonction du signal de reconnaissance.

8. Système (10) selon l'une quelconque des revendications 1 à 7, dans lequel le système (10) fait partie d'une machine agricole, d'un robot ou d'un drone, ou est connectable à ceux-ci.

9. Système (10) selon l'une quelconque des revendications 1 à 8, comprenant une pluralité de buses (13), dans lequel les buses (13) sont agencées de telle sorte que chaque buse (13) pulvérise une zone avec du liquide (F) qui a une étendue latérale maximale inférieure à 10 cm.

10. Système (10) selon l'une quelconque des revendications 1 à 9, comprenant en outre une unité de capteur (S), dans lequel l'unité de capteur (S) comprend une caméra et une unité d'analyse, dans lequel la caméra est configurée pour générer des prises de vue d'une zone cible, dans lequel l'unité d'analyse est configurée pour analyser les prises de vue, pour reconnaître un objet cible spécifique (P1) et pour transmettre un signal de reconnaissance à l'unité de commande, dans lequel l'unité de commande est configurée pour amener le au moins un dispositif de déviation (15), en réponse à la transmission du signal de reconnaissance, à diriger le liquide (F) sortant de la au moins une buse (13) en direction de l'objet cible spécifique (P1).

11. Système (10) selon l'une quelconque des revendications 1 à 10, dans lequel la au moins une buse (13) est un composant d'une tête d'impression à jet d'encre.

12. Procédé pour la distribution d'un liquide (F) dans un champ pour plantes cultivées (P2) comprenant les étapes de :
- déplacement d'un appareil de pulvérisation dans ou au-dessus du champ (F) pour plantes cultivées (P2),
- acheminement du liquide (F) depuis au moins un réservoir de stockage (12) en direction d'au moins une buse (13) pendant le déplacement,
- commutation d'un dispositif de déviation (15) d'un premier état parmi au moins deux états vers un deuxième état des au moins deux états, dans lequel dans l'un des au moins deux états le liquide (F) sortant de la au moins une buse (13) est appliqué en direction d'un objet cible (P1) et dans l'autre état des au moins deux états le liquide sortant de la au moins une buse (13) est appliqué en direction d'au moins un récipient collecteur (14), dans lequel des moyens d'acheminement (17) acheminent le liquide (F) depuis le au moins un récipient collecteur (14) vers le au moins un réservoir de stockage (12),
**caractérisé en ce que** le dispositif de déviation (15) comprend au moins une buse d'air, dans lequel la au moins une buse d'air est orientée de telle sorte qu'un flux d'air sortant de la au moins une buse d'air commute le dispositif de déviation (15) du premier état au deuxième état et/ou du deuxième état au premier état.

13. Procédé selon la revendication 12, dans lequel le liquide (F) comprend un ou plusieurs nutriments et/ou un ou plusieurs produits phytosanitaires et/ou un ou plusieurs agents pour le traitement de semences.

14. Procédé selon l'une quelconque des revendications 12 ou 13, dans lequel l'objet cible (P1) est une plante ou un groupe de plantes ou est une partie d'une plante ou plusieurs parties d'une plante.

15. Procédé selon l'une quelconque des revendications 12 à 14, comprenant les étapes de :
- déplacement de l'appareil de pulvérisation dans ou au-dessus du champ pour plantes cultivées (P2),
- acheminement du liquide (F) depuis le au moins un réservoir de stockage (12) en direction de la au moins une buse (13) pendant le déplacement,
- réception d'un signal relatif à la présence d'un objet cible spécifique (P1),
- commutation du dispositif de déviation (15) du premier état au deuxième état, dans lequel le premier état applique le liquide (F) sortant de la au moins une buse (13) en direction du au moins un récipient collecteur (14) et le deuxième état applique le liquide (F) sortant de la au moins une buse (13) en direction de l'objet cible spécifique (P1).
